# EUROPÄISCHE PATENTSCHRIFT

(11) **EP 0 391 091 B1**
(45) Veröffentlichungstag und Bekanntmachung des Hinweises auf die Patenterteilung: **28.04.1993**
(21) Anmeldenummer: 90104551.8
(22) Anmeldetag: 09.03.1990
(51) Int. Cl.: B01D 33/04, B01D 33/056, B01D 33/333, B01D 33/66

(54) **Unterdruck-Bandfilter-Anlage**
Vacuum belt filtration apparatus
Filtre à bande avec aspiration

(30) Priorität: 05.04.1989 DE 3910935
(43) Veröffentlichungstag der Anmeldung: 10.10.1990
(73) Patentinhaber: HYDAC TECHNOLOGY GMBH, D-66280 Sulzbach (DE)
(72) Erfinder: Teckentrup, Heinrich, D-6680 Neunkirchen 4 (DE)
(74) Vertreter: Patentanwälte Bartels und Partner

(56) Entgegenhaltungen:
- EP-A- 0 024 041
- EP-A- 0 228 210
- DE-A- 2 838 945
- FR-A- 85 517
- FR-A- 2 209 724
- GB-A- 1 015 898
- US-A- 3 358 834
- US-A- 3 513 974
- US-A- 3 741 389

## Beschreibung

Die Erfindung geht aus von einer Filtrieranlage mit den Merkmalen des Oberbegriffes des Anspruches 1.

Durch die DE-C-28 38 945 ist eine Filtrieranlage zum Abfiltrieren einer Flüssigkeit aus einer Suspension bekannt, bei der über eine Aufgabevorrichtung die Suspension zuführbar ist Die bekannte Filtrieranlage weist eine Absaugkammer auf, in der ein Unterdruck erzeugbar ist, deren Durchgang von einem als Endlosband ausgebildeten Filtermittel abdeckbar ist. Dieses endlose Filtermittel ist auf einem angetriebenen Endlosförderband über den Durchgang hinwegbewegbar und an der Stelle des Durchganges ist das Filtermittel zwischen der Suspension und dem Förderband angeordnet. Hierdurch ist das Filtermittel an der Stelle des Durchganges durch das Förderband derart abgestützt, daß es bei Betrieb der Absaugkammer nicht in diese eingesogen wird, was die Filtrierleistung herabsetzen und insbesondere einen gewünschten kontinuierlichen Filtriervorgang nicht ermöglichen würde.

Das bekannte Filterband gemäß der DE-C-28 38 945 ist einstückig ausgebildet und biegefähig, so daß es entlang von Umlenkrollen führbar ist, wobei es allerdings nach längerem Betrieb aufgrund seiner Unnachgiebigkeit und durch die Umlenkstellen bedingt zu einem Verschleiß und damit zu einem Unbrauchbarwerden des Filterbandes kommt, das dann gegen ein anderes neues auszutauschen ist. Ein dahingehender Austausch führt aber zu Stillstandszeiten für die gesamte Filtrieranlage.

Durch die EP-B-0 228 210 ist eine vergleichbare Filtrieranlage mit einem Sammelbehälter für die Aufnahme der angesprochenen Suspension bekannt. Bei dieser bekannten Filtrieranlage ist das Filtermittel als Endlosband ausgebildet, das aus einzelnen biegefähigen Segmenten besteht, die mittels starrer Verbindungsmittel in Form von Stäben miteinander verbunden sind. An den derart gebildeten Verbindungsstellen des Filterbandes bildet dieses Wölbungen aus, die zum Fortbewegen des Filtermittels in Anlage bringbar sind mit Stegen eines Fördermittels, die endseitig mit zwei Endlosketten dieses Fördermittels verbunden sind. Die antreibbaren Endlosketten bewegen die Stege zusammen mit dem Filtermittel und dienen somit dem Austrag der Verunreinigungen aus dem Sammelbehälter. Die Filtrieranlage ist kompliziert und baut groß auf. An den Stellen der Umlenkung sind die biegefähigen Segmente des Filterbandes starken Belastungen ausgesetzt, insbesondere bei Inbetriebnahme der Filtrieranlage, was nie völlig ruckfrei vonstatten geht, so daß aufgrund des damit einhergehenden Verschleißes das Filtermittel sich rasch abnutzt und insgesamt gegen ein neues auszutauschen ist, was mit Stillstandszeiten der gesamten Filtrieranlage einhergeht.

Ausgehend von diesem Stand der Technik liegt der Erfindung die Aufgabe zugrunde, eine Filtrieranlage zu schaffen, mit der sich gute Filtrierergebnisse erzielen lassen, die einen geringen Platzbedarf hat und bei der Wartungsintervalle für den Austausch des Filtermittels weiter auseinanderliegen als bei den bisher bekannten Filtrieranlagen.

Diese Aufgabe wird mit den Merkmalen des kennzeichnenden Teiles des Anspruches 1 in Verbindung mit den Merkmalen des Oberbegriffes gelöst. Dadurch, daß das Filtermittel aus einzelnen biegefähigen Segmenten besteht und je zwei nacheinander angeordnete Segmente über mindestens ein mit seinen Enden an den einander zugewandten Rändern der Segmente angreifenden Federelement miteinander verbunden sind, ist ein Längenausgleich zwischen dem Endlosförderband und dem Filtermittel in Form der Segmente, die ebenfalls ein Endlosband bilden, möglich, was einen störungssicheren Betrieb der Anlage gewährleistet.

Selbst bei einem nicht ruckfreien Anfahren der Filtrieranlage geben die biegefähigen Segmente aufgrund der Federelemente in ihrer Lage zueinander in Verfahrrichtung nach und nehmen unter dem Krafteinfluß der Federelemente nach einem Ausgleich wieder eine Lage auf dem Endlosförderband ein, die verschleißfrei ist. Der angesprochene Längenausgleich findet auch im Bereich der Umlenkstellen statt, so daß auch an den Stellen engster Umlenkung ein verschleißfreier, das Filtermittel schonender Betrieb gewährleistet ist. Das Filtermittel muß daher weniger häufig wegen Verschleiß ausgetauscht werden, was wiederum dem kostengünstigen Betrieb der Filtrieranlage zugute kommt. Besonders geeignet ist die erfindungsgemäße Filtrieranlage zum Abfiltrieren einer Kühlschmierstoffflüssigkeit aus einer Suspension, die aus dieser Kühlschmierstoffflüssigkeit und Verunreinigungen, meist in Form von Spänen, besteht.

Bei einer bevorzugten Ausführungsform der erfindungsgemäßen Filtrieranlage weist das Filtermittel Filtergewebematten, vorzugsweise aus einem Stahlgeflecht mit vorgebbarer Maschenweite, auf. Hierdurch läßt sich die Filterfeinheit aus der Maschenweite des eingesetzten Filtergewebes bestimmen und je nach dem Verwendungszweck vorher genau festlegen. Bei einer weiteren bevorzugten Ausführungsform der erfindungsgemäßen Filtrieranlage ist das Federelement aus einer Zugfeder gebildet.

Soweit die Enden der Federmittel gemäß den Merkmalen des Anspruchs 4 und/oder des Anspruchs 5 an den einander zugewandten Rändern zweier Segmente angreifen, ergibt sich eine besonders einfache und zweckmäßige Konstruktion.

Bei einer weiteren besonders bevorzugten Ausführungsform gemäß Anspruch 6 überdecken die Stege die zwischen den einander benachbart gegenüberliegend angeordneten Segmenten gebildete Trennstellen, wobei sie mit dem Endlosförderband mittels Befestigungsmitteln verbunden sind. Ferner begrenzen diese Stege mit dem Endlosförderband jeweils einen Spalt, zwischen denen die jeweiligen Segmente des Filtermittels zumindest mit einem ihrer Ränder hindurchbewegbar sind. Diese Stege, die dem Austrag von Schmutzpartikeln aus dem Sammelbehälter dienen, erlauben somit, daß die Kühlschmierstoffflüssigkeit nur an den Stellen der Filtergewebematten der einzelnen Segmente, also gefiltert in die Absaugkammer, gerät und ansonsten an keiner anderen Stelle, wo eine dahingehende Filtrierung nicht gewährleistet wäre.

Durch die Verbindung der Stege mit dem Endlosförderband entsteht eine bauliche Einheit zwischen dem Endlosförderband und dem Filtermittel, wodurch Störungen infolge verklemmter Fremdkörper, beispielsweise in Form von Werkstücken oder Werkzeugen, in der Anlage vermieden werden. Durch den Spalt zwischen Endlosförderband und Steg ist die freie Bewegbarkeit der einzelnen Segmente des Filtermittels für den längenausgleich gewährleistet.

Soweit die Stege vorzugsweise gemäß Anspruch 8 ausgebildet sind, würde das Filtermittel in Form des Endlosbandes an den Trennstellen zwischen den einzelnen Segmenten nicht aufgehen, mithin also nicht vom Förderband als Transporteinrichtung abfallen, selbst wenn ein Teil oder alle Federelemente an dieser Trennstelle zerstört wären, denn der Steg würde dann einen Anschlag bilden und über die jeweiligen Haltemittel und/oder Ösen, die sich dann an die Anschläge anlegen würden, das Filtermittel in Form des Endlosbandes in Förderrichtung weiter mitnehmen.

Soweit die erfindungsgemäße Filtrieranlage die Merkmale des Anspruchs 10 aufweist, ist diese besonders zweckmäßig ausgestaltet. Dabei dient die Schrägführung an der Auslaufstelle des Sammelbehälters als Abtropfstrecke. Diese Abtropfstrecke hat die Aufgabe, die mittels des Endlosförderbandes und des Filtermittels ausgeschleppte Kühlschmierstoffflüssigkeit zumindest teilweise wieder zurückzugewinnen und dem Sammelbehälter zuzuführen. Mithin kann also durch diese Maßnahme der Kühlschmierstoffverlust verringert werden, was zum einen der Umwelt zu Gute kommt, da dieser dann nicht von dem Sammelbehälter nach außen gelangen kann, und zum anderen die Kosten günstig beeinflußt, denn es muß kein neuer Kühlschmierstoff zum Abdecken dieser Verluste nachgekauft werden.

Soweit gemäß den Merkmalen des Anspruchs 11 das Filtermittel abgebürstet wird, werden in den Filtergewebematten der Segmente vorhandene Schmutzpartikel aus dem Filtermittel entfernt und dadurch das Filtermittel gereinigt.

Bei einer bevorzugten Ausführungsform der erfindungsgemäßen Filtrieranlage weist diese eine Reinigungs- und Trocknungsvorrichtung auf, die mittels einer Düse das Filtermittel anbläst und/oder durchbläst. Durch dieses An- und/oder Durchblasen des Filtermittels werden die Schmutzpartikel aus dem Filtergewebe entfernt, wobei gleichzeitig eventuell auch noch anhaftende Kühlschmierstoffflüssigkeit entfernbar ist, so daß das Filtergewebe des Filtermittels gereinigt und gleichzeitig dabei getrocknet wird.

Bei einer anderen bevorzugten Ausführungsform der erfindungsgemäßen Filtrieranlage ist die Reinigungs- und Trocknungsvorrichtung aus einer Vakuumkammer gebildet, mittels der die Oberfläche des Filtermittels absaugbar ist. Auch mit dieser Einrichtung lassen sich sowohl Schmutzpartikel als auch Kühlschmierstoffflüssigkeitsreste entfernen, was einer Reinigung bei gleichzeitiger Trocknung des Filtergewebes gleichkommt.

Bei einer besonders bevorzugten Ausführungsform der Filtrieranlage sind die eben beschriebenen Reinigungs- und Trocknungsvorrichtungen miteinander kombiniert, wobei eine Strömungseinrichtung vorhanden ist, vorzugsweise in Form eines Seitenkanalverdichters, mit der die Vakuumkammer mit der Düse verbunden ist. Bei Betrieb des Seitenkanalverdichters läßt sich ein besonders hoher Reinigungs- und Trocknungsgrad des Filtermittels erreichen. Dieser Reinigungs- und Trocknungsgrad läßt sich noch weiter verbessern, wenn die Bürste zum Abbürsten des Filtergewebes zu dieser kombinierten Reinigungsund Trocknungsvorrichtung des weiteren mit hinzutritt.

Die hier beschriebenen Reinigungs- und Trocknungsvorrichtungen lassen sich vorzugsweise bei der erfindungsgemäßen Filtrieranlage verwenden. Sie lassen sich aber auch für andere Filtrieranlagen jedweder Art zum Einsatz bringen, wo dieses zweckmäßig erscheint.

Ferner sei hier noch angemerkt, daß mit der erfindungsgemäßen Filtrieranlage Flüssigkeiten jedweder Art aus Suspensionen abfiltriert werden können.

Die Erfindung ist in der folgenden Beschreibung an Hand eines in den Zeichnungen dargestellten Ausführungsbeispiels im einzelnen erläutert.

Es zeigen:
- Fig. 1: in prinzipieller Darstellung eine Seitenansicht der erfindungsgemäßen Filtrieranlage;
- Fig. 2: die Draufsicht auf ein erstes Ausführungsbeispiel eines Segments des Filtermittels mit Filtergewebematte;
- Fig. 3 und 4: einen Schnitt nach der Linie I - I in Fig.2, wenn an der Stelle dieses Schnittes zwei Segmente einander benachbart gegenüberliegend angeordnet sind und die hierdurch entstehende Trennstelle durch einen Steg abgedeckt ist, wobei

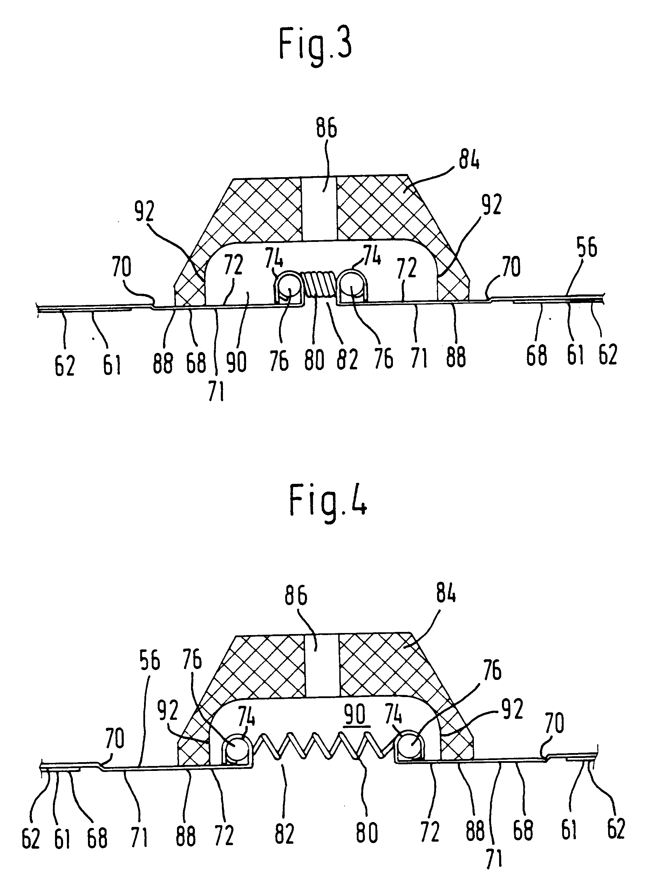

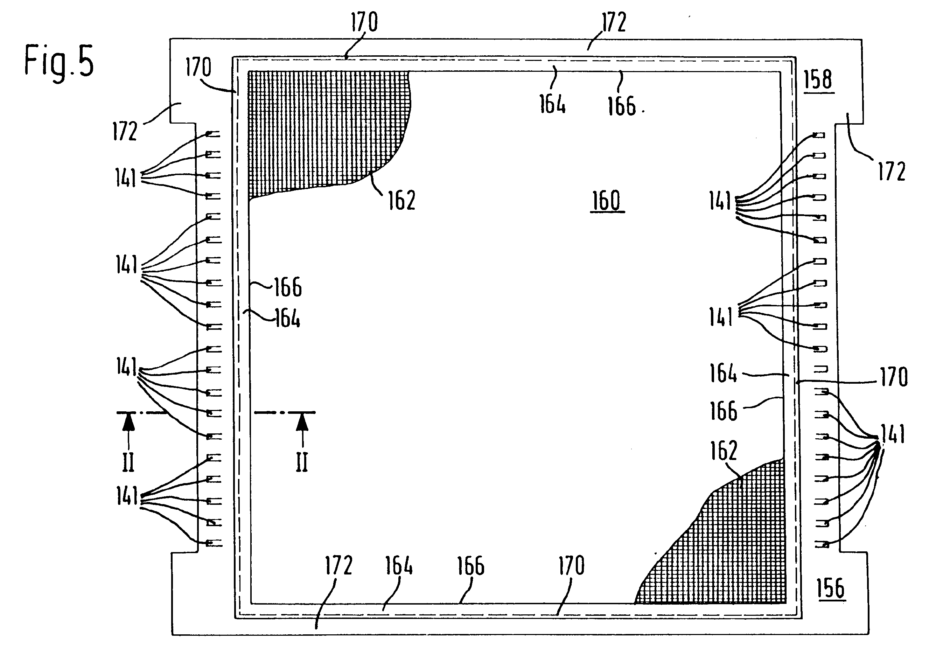

Fig.3 und 4 die beiden einander benachbart gegenüberliegend angeordneten Segmente in einer Stellung wiedergibt, bei der sie sich am nächsten kommen bzw. bei der sie voneinander entfernt angeordnet sind.

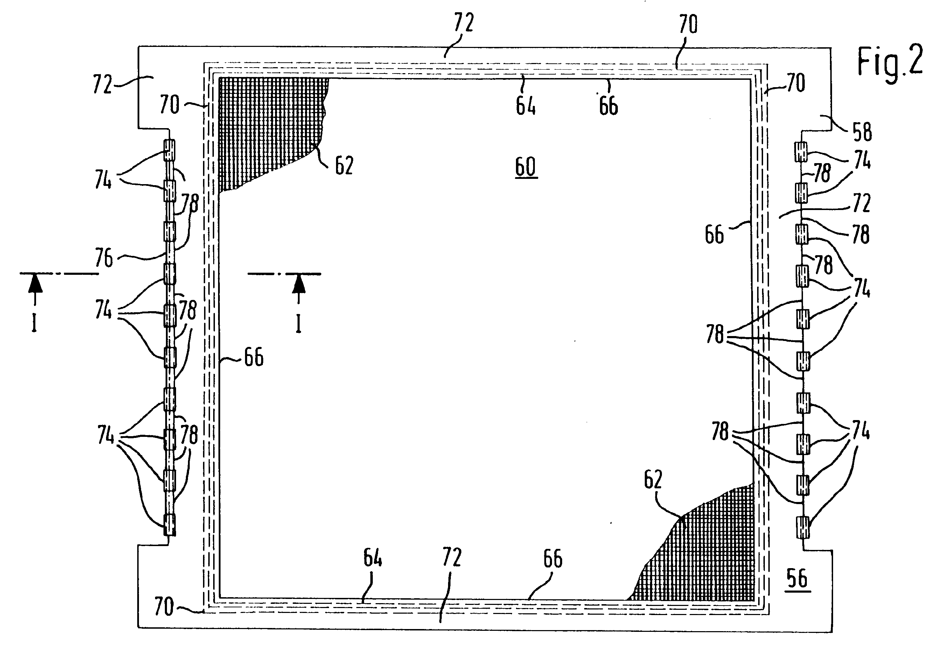

- Fig. 5: die Draufsicht auf ein zweites Ausführungsbeispiel eines Segmentes des Filtermittels mit Filtergewebematte, das bis auf den Rand mit den Ösen dem ersten Ausführungsbeispiel nach der Fig. 2 entspricht.

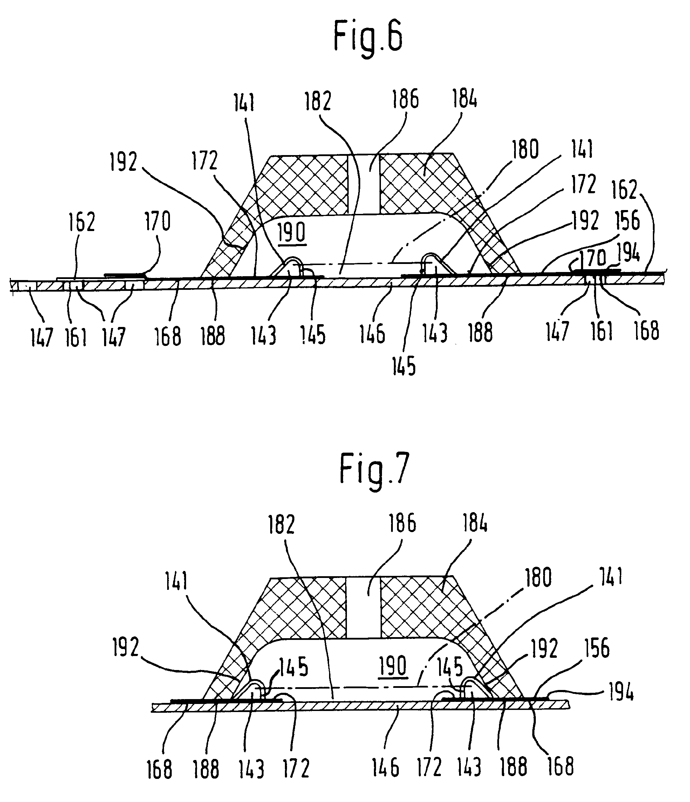

- Fig. 6 und 7: einen Schnitt nach der Linie II-II in Fig. 5, wobei die Fig. 6 und 7 bis auf die anders gestalteten Rändern mit den Ösen dem ersten Ausführungsbeispiel nach der Fig. 3 bzw. 4 entspricht.

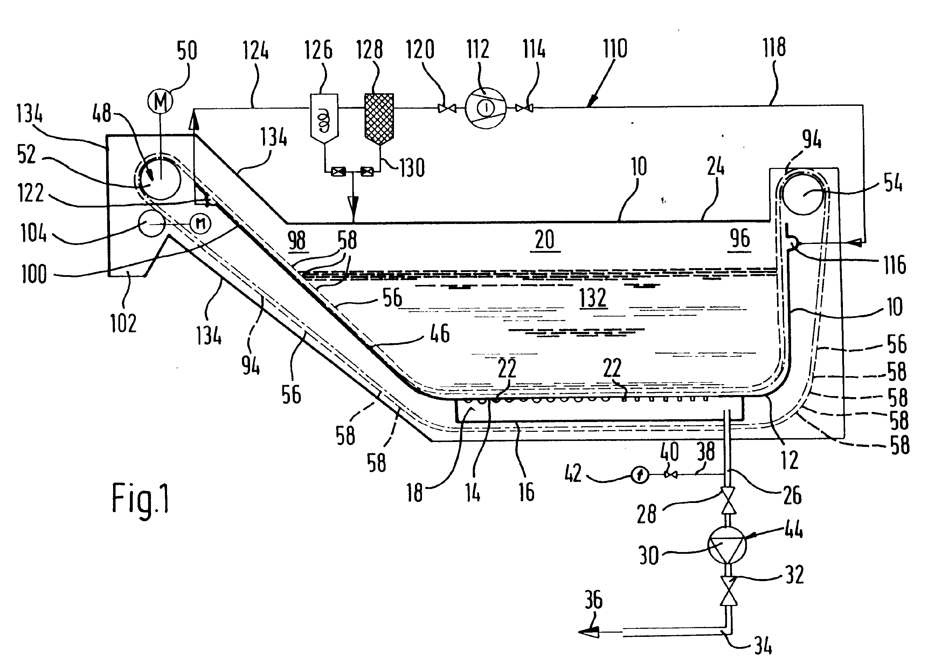

Fig.1 zeigt den prinzipiellen Aufbau der erfindungsgemäßen Filtrieranlage. Sie weist einen Sammelbehälter 10 auf, der wannenförmig ausgebildet ist. An seinem in Fig.1 gesehen unteren Teil weist er ein Bodenteil 12, beispielsweise in Form eines Bodenbleches, auf. Dieser Bodenteil 12 ist von einem Durchgang 14 durchbrochen, der eine rechteckförmige Ausnehmung im Bodenteil 12 bildet. In Fig.1 gesehen ist unterhalb dieses Durchganges 14 mittels einer Wanne 16, die Teil des wannenförmigen Sammelbehälters 10 ist das Innere des Sammelbehälters 10 von der Umgebung außerhalb des Sammelbehälters 10 abgetrennt. Der Inhalt dieser Wanne 16 bildet eine Absaugkammer 18, die über den Durchgang 14 mit dem Inneren 20 des Sammelbehälters 10 verbunden ist. Der Durchgang 14 ist von Stützelementen 22 durchzogen, die aus Stäben, beispielsweise Profilstäben mit kreisrundem oder quadratischem Querschnitt (siehe Fig.1, linke bzw. rechte Hälfte des von Stützelementen 22 durchzogenen Durchganges 14) gebildet sind und die im wesentlichen horizontal verlaufend mit ihren Enden an den Rändern des Durchganges 14 im Bodenteil 12 gehalten sind. Der Sammelbehälter 10 weist einen Eingang (nicht dargestellt) an seiner in Fig.1 gesehen oberen Seite 24 auf. Dieser Eingang verbindet das Innere 20 des Sammelbehälters 10 mit einer Stelle (nicht dargestellt), mittels der die verschmutzte Kühlschmierstoffflüssigkeit von einer oder mehreren Bearbeitungsmaschinen für die Zuleitung in den Sammelbehälter 10 erfaßbar ist. Diese Zuleitung läßt sich hermetisch von der Umgebung abtrennen, so daß beim Befüllen des Sammelbehälters 10 keine Beeinträchtigungen der Umwelt auftreten können.

Das Innere der Absaugkammer 18 ist über eine Verbindungsleitung 26 und ein absperrbares Ventil 28 mit einer Saug-Pumpe 30 verbunden, deren Ausgang über ein absperrbares Ventil 32 und eine weitere Verbindungsleitung 34 an einen Verbraucher, beispielsweise die oben angesprochenen Bearbeitungsmaschinen, angeschlossen ist. Der Pfeil 36 gibt dabei die Durchflußrichtung an, soweit die Saug-Pumpe 30 in Betrieb ist. An die Verbindungsleitung 26 ist über eine Leitung 38 und ein absperrbares Ventil 40 ein Kontakt-Vakuummeter 42 für die Überwachung des in der Absaugkammer 18 herrschenden Unterdruckes angeschlossen. Die Verbindungsleitungen 26 und 34 sowie die Ventile 28 und 32 einschließlich der Saug-Pumpe 30 bilden die als Ganzes mit 44 bezeichnete Unterdruckeinrichtung, mittels der in der Absaugkammer 18 ein Unterdruck erzeugbar ist.

Die erfindungsgemäße Filtrieranlage weist ferner ein Endlosförderband 46 auf, das mittels eines als Ganzes mit 48 bezeichneten Antriebes antreibbar ist. Dieser Antrieb 48 weist einen stufenlos regelbaren Getriebemotor 50 auf, der die Antriebsrolle 52 für das Bewegen des Endlosförderbandes 46 antreibt. Das Endlosförderband 46 ist im wesentlichen um diese Antriebsrolle 52 sowie um eine Spannrolle 54 umgelenkt, mittels der sich das Endlosförderband 46 spannen läßt. Das Endlosförderband, das je nach Einsatzgebiet der Filtrieranlage beispielsweise aus Stahl, Gummi oder Kunststoff hergestellt ist, kann für seinen Umlauf in der erfindungsgemäßen Filtrieranlage um weitere Umlenkrollen (nicht dargestellt) und/oder Schienenführungen entlang deren die Ränder des Endlosförderbandes 46 führbar sind, geführt sein. Im Bereich des Durchganges 14, also im Bereich des Überganges zwischen dem Inneren 20 des Sammelbehälters 10 und der Absaugkammer 18, ist dieses Endlosförderband mittels der Stützelemente 22 über diesen Durchgang 14 geführt. Dieses Endlosförderband 46 ist perforiert (in den Fig. 6 und 7 für das zweite Ausführungsbeispiel dargestellt), weist also Durchlässe auf, mittels deren eine durchgehende Verbindung zwischen dem Inneren 20 des Sammelbehälters 10 und dem Inneren der Absaugkammer 18 herstellbar ist. Die Breite des Endlosförderbandes ist derart gewählt, daß es im Bereich des Durchganges 14 diesen mit einem gewissen Überhang an den Rändern des Durchganges 14 vollständig abdeckt. Zum Schutz des Endlosförderbandes vor mechanischen Beschädigungen sind diejenigen Flächen, auf denen dieses Endlosförderband 46 im Inneren 20 des Sammelbehälters 10 entlanggleitet, mit Kunststoff ausgekleidet.

Für den Filtriervorgang ist ein Filtermittel 56 vorgesehen, das, wie dies insbesondere die Fig.1 zeigt, von der Oberseite des Endlosförderbandes 46 getragen ist. Dieses Filtermittel 56 ist aus einzelnen Segmenten 58 gebildet, von denen eines in Form eines ersten Ausführungsbeispieles in der Draufsicht in Fig.2 dargestellt ist, wie sie sich ergeben würde, wenn ein Betrachter im Inneren 20 des Sammelbehälters 10 auf das Endlosförderband 46 mit dem Filtermittel 56 sehen würde. Wie sich dies aus der Fig.2 ergibt, ist dieses Segment 58 im wesentlichen rechteckförmig ausgebildet. In der Mitte eines jeden Segmentes 58 ist eine durchgehende Aussparung 60 vorhanden, die von einer ebenfalls im wesentlichen rechteckförmigen Filtergewebematte 62 abdeckbar ist, von der in Fig.2 andeutungsweise nur die obere linke und untere rechte Ecke in Blickrichtung auf Fig.2 gesehen der einfacheren Darstellung wegen gezeigt sind. Die Rechteckfläche der Filtergewebematte 62 ist etwas größer als die Rechteckfläche der Aussparung 60, so daß die Filtergewebematte 62 mit einem Randbereich 64 über die seitlichen Begrenzungslinien 66 der Aussparung 60 hinausragt (siehe insbesondere Fig.2). Damit die einzelnen Segmente 58 mit ihren in den Fig.3 und 4 gezeigten Unterseiten 68 eine ebene Fläche für die Auflage auf der oberen ebenen Fläche des Endlosförderbandes 46 bilden, ist jedes Segment 58 in einem streifenförmigen Randteil 70 (siehe insbesondere Fig. 3 und 4) nach unten hin derart umgebördelt, daß zur Bildung der Unterseite 68 eines jeden Segmentes 58 als ebene Fläche die in Fig.3 und 4 gesehen untere Fläche 61 einer jeden Filtergewebematte 62 in einer Ebene liegt mit der unteren Fläche 71 des rechteckförmigen Randes 72 eines jeden Segmentes 58 von dem der umgebördelte Randteil 70 eines jeden Segmentes 58 nach außen hin umschlossen ist. In den Fig.3 und 4 würde, soweit die dort dargestellten Segmente 58 auf der Oberseite des Endlosförderbandes 46 angeordnet wären, diese Oberseite des Endlosförderbandes auf den Unterseiten 68 der Segmente 58 anliegen (in den Fig. 6 und 7 für das zweite Ausführungsbeispiel dargestellt). Die einzelnen Filtergewebematten 62 sind mit den jeweiligen Segmenten 58, beispielsweise mittels einer Randschweißung, die um den Außenrand der Gewebematten 62 verläuft, fest miteinander verbunden.

Die einzelnen Segmente 58 bestehen aus einem biegefähigen Material, beispielsweise aus Feder-Stahlblech, damit sie an den Stellen der Umlenkung des Endlosförderbandes 46, wie dies beispielsweise an der Antriebsrolle 52 und der Spannrolle 54 der Fall ist, der Umlenkung des Endlosförderbandes 46 nachfolgen können. Ferner bestehen die Filtergewebematten 62 der einzelnen Segmente 58 aus einem Stahlgeflecht mit vorgebbarer, also mit einer bestimmten Maschenweite, das ebenfalls biegefähig ist. Die Filterfeinheit ist dabei gleich der Maschenweite der in den einzelnen Segmenten 58 eingesetzten Filtergewebematten 62.

Wie dies insbesondere die Fig.3 und 4 zeigen, bei denen jeweils zwei Segmente 58 dargestellt sind, die mit ihren einander zugewandten Rändern 72 unmittelbar benachbart gegenüberliegend angeordnet sind, ist an diesen Rändern eine jeweils über die Oberseite eines jeden Segmentes 58 hinausstehende im Querschnitt im wesentlichen kreisrunde Umbördelung vorgesehen, die jeweils für die Aufnahme eines im Querschnitt kreisrunden Stabes 76 dienen, von denen in Fig.2 in Richtung des Betrachters gesehen nur der linke Stab 76 in die Umbördelung 74 der besseren Darstellung wegen eingesetzt gezeichnet ist.

Die hochgestellte Umbördelung 74 stellt das Haltemittel für die durchgehenden Stäbe 76 dar, die auf diese Art und Weise mit den jeweiligen Segmenten 58 verbunden sind. Die jeweilige Umbördelung 74 ist von Durchbrüchen 78 unterbrochen (siehe Fig.2), in die der jeweils hierfür vorgesehene Stab 76 eingreift. An diesen Stellen der Durchbrüche 78, die von dem jeweiligen Stab 76 durchgriffen sind, sind, wie dies insbesondere die Fig.3 und 4 zeigen, die jeweils einen Enden der Federelemente in Form von Zugfedern 80 angelenkt, die das Verbindungsmittel darstellen, mittels der die jeweils einander benachbart gegenüberliegend angeordneten Segmente 58 miteinander verbunden sind. Dabei muß nicht an jeder Stelle eines derartigen Durchbruches 78 das Ende einer hierfür jeweils vorgesehenen Zugfeder 80 angelenkt sein, vielmehr kann in Abhängigkeit von den Federeigenschaften dieses Federelementes und von den Einsatzbedingungen beim Betrieb einer derartigen Filtrieranlage bestimmt, die jeweiligen Federelemente in Form von Zugfedern 80 unter Freilassen einer oder mehrerer Durchbrüche 78 in vorgebbaren Abständen voneinander mit ihren Enden an den jeweils einander benachbart gegenüberliegend angeordneten Durchbrüchen von einander benachbart gegenüberliegend angeordneten Segmenten 58 angelenkt sein. Zur Überdeckung der jeweiligen Trennstellen 82 (siehe Fig.3 und 4) , die von den einzelnen Segmenten 58 mit ihren einander zugewandten Seiten in Form der einander benachbart gegenüberliegenden Ränder 72 der Segmente 58 gebildet sind, sind diese jeweils von einem Steg 84 vollständig überdeckt, um zu verhindern, daß die im Sammelbehälter 10 befindliche Suspension ohne filtriert worden zu sein, über diese Trennstellen 82 in die Absaugkammer 18 gelangen kann. Diese Stege 84, die dem Schmutzaustrag aus dem Sammelbehälter 10 dienen, sind über Befestigungsmittel(nicht dargestellt), beispielsweise Schraubenbolzen, mit dem Endlosförderband 46 fest verbunden.

Die Fig.3 und 4, die einen Querschnitt durch einen Steg 84 wiedergeben, zeigen dabei eine durchgehende Bohrung 86, die der Aufnahme eines dahingehenden Befestigungsmittels dient. Die Bohrungen 86 mit den Befestigungsmitteln sind derart angeordnet, daß die letztgenannten an den Stellen die Trennstellen 82 durchgreifen, die nicht von einem Verbindungsmittel in Form der Zugfeder 80 überdeckt sind. Die Befestigungsmittel sind also derart angeordnet, daß sie zwischen den Zugfedern 80 in der gleichen Höhe, an der die Umbördelung 74 hochgestellt ist, zwischen diesen Zugfedern 80 hindurchgreifen. Ferner sind die Stege 84 derart auf dem Endlosförderband befestigt, daß zwischen der Oberseite dieses Endlosförderbandes 46 und der Unterseite 88 des Steges 84 jeweils ein Spalt (in den Fig. 6 und 7 für das zweite Ausführungsbeispiel dargestellt) begrenzt ist, zwischen dem die jeweiligen Segmente 58 des Filtermittels 56 mit ihren Rändern 72 hindurchbewegbar sind. Hierdurch ergibt sich in Abhängigkeit von den Federeigenschaften der Zugfedern 80 eine gewisse freie Verschiebbarkeit der einzelnen Segmente 58 zueinander. Aus den Fig.3 und 4 läßt sich der Grad einer dahingehenden Verschiebbarkeit erkennen. So ist in Fig.3 die Stellung zweier einander benachbart gegenüberliegend angeordneter Segmente 58 wiedergegeben, wie sie entsteht, wenn die Zugfedern 80 vollständig entspannt sind, wohingegen Fig.4 eine Stellung wiedergibt, bei der die einander benachbart gegenüberliegend angeordneten Segmente 58 entsprechend voneinander entfernt sind und die dazwischen angeordneten Zugfedern 80 in ihrem gespannten Zustand die Neigung haben, die einander zugewandten Ränder 72 der Segmente 58 aufeinander zu zu bewegen. Um diese freie Verschiebbarkeit in dem hier gezeigten Umfang zu ermöglichen und zur Aufnahme der Verbindungsmittel in Form der Zugfedern 80 und der Haltemittel in Form der Umbördelungen 74 für die Aufnahme der Stäbe 76 weist jeder Steg 84 einen entsprechend dimensionierten Hohlraum 90 auf. Diese Hohlräume 90 bilden mit ihren einander benachbart gegenüberliegend angeordneten Seitenflächen 92 Anschläge für das Anlegen der Haltemittel in Form der Umbördelungen 74. Hierdurch ist gewährleistet, daß auch bei einer Zerstörung aller Verbindungsmittel in Form der Zugfedern 80 die einander benachbart gegenüberliegend angeordneten Segmente 58 keinen Abstand voneinander einnehmen können, der größer ist als der Abstand, den die beiden einander gegenüberliegend angeordneten Seitenflächen 92 eines jeden Steges 84 voneinander einnehmen.

Durch die Aneinanderreihung und Verbindung der einzelnen Segmente 58 miteinander entsteht ein als Ganzes mit 94 bezeichnetes Endlosband (siehe Fig.1). Dieses Endlosband 94 ist mit dem Endlosförderband 46 über die Befestigungsmittel an den Stegen 84 miteinander verbunden, so daß diese eine bauliche Einheit bilden. Die angesprochene Verschiebbarkeit der einzelnen Segmente 58 zueinander erlaubt einen Längenausgleich zwischen dem Endlosband 94 des Filtermittels 56 und dem Endlosförderband 46. Hierdurch wird die störungsfreie Mitnahme des Endlosbandes 94 auch an den Stellen der Umlenkung der beiden Bänder gewährleistet. Die Breite der einzelnen Segmente 58 ist derart, daß das Endlosförderband 46 mit seinen Perforierungen durch die Segmente 58 mit ihren Filtergewebematten 62 überdeckt ist, so daß die abzufiltrierende Flüssigkeit in jedem Fall die Filtergewebematten 62 durchqueren muß, bevor sie in das Innere der Absaugkammer 18 gelangt.

Die beiden Bänder, also Endlosförderband 46 und Endlosband 94, sind derart geführt (siehe insbesondere Fig.1), daß diese an einer Einlaufstelle 96 in das Innere 20 des Sammelbehälters 10 hineingelangen, den Durchgang 14 überdecken und damit das Innere 20 des Sammelbehälters 10 von der Absaugkammer 18 trennen, anschließend entlang einer Auslaufstelle 98, die eine Schrägführung 100 aufweist, aus dem Inneren 20 dieses Sammelbehälters 10 herausführen, um die Antriebsrolle 52 herumführen, unterhalb der Absaugkammer 18 vorbeilaufen und an der Spannrolle 54 erneut umgelenkt wiederum in den Bereich der Einlaufstelle 96 des Sammelbehälters 10 gelangen. An der Auslaufstelle 98 ist eine Spanausgabe 102 (siehe Fig.1) vorhanden, über die die Späne, die mittels den Stegen 84 des Endlosförderbandes 46, soweit dieses umläuft, aus dem Inneren 20 des Sammelbehälters 10 herausbefördert werden, abführbar sind. In Bewegungsrichtung der beiden Bänder der Spanausgabe 102 nachgeordnet ist eine Filtermittelreinigungseinrichtung vorhanden, in Form einer mittels eines Motors antreibbaren Bürste 104, mittels der das Filtermittel 56 und insbesondere die einzelnen Filtergewebematten 62 der einzelnen Segmente 58 für ein weiteres Entfernen von Schmutzpartikeln für die Abgabe über die Spanausgabe 102 abbürstbar sind. Ferner ist eine als Ganzes mit 110 bezeichnete Reinigungs- und Trocknungsvorrichtung vorhanden, die einen Seitenkanalverdichter 112 als Strömungseinrichtung aufweist. Der Ausgang dieses Seitenkanalverdichters ist über ein Umschaltventil 114 mit einer Düse 116 über eine Leitung 118 verbunden. Die Düse 116 befindet sich am Anfang der Einlaufstelle 96 des Sammelbehälters 10. Der Eingang des Seitenkanalverdichters 112 ist über ein Umschaltventil 120 mit einer Vakuumkammer 122 über eine Leitung 124 verbunden. Zwischen der Vakuumkammer 122 und dem Umschaltventil 120 ist ein nach dem System von Prof.Barth arbeitender Zyklonabscheider 126 vorhanden sowie eine Filtereinheit 128. Zyklonabscheider 126 und Filtereinheit 128 sind über die Leitung 124 miteinander verbunden und weisen ferner ausgangsseitig eine Verbindungseinheit 130 auf, die sie mit dem Inneren 20 des Sammelbehälters 10 verbindet.

Die beiden Umschaltventile 114 und 120 sind derart ansteuerbar, daß sie in einer Ventilstellung bei Betrieb des Seitenkanalverdichters 112 Luft über das Umschaltventil 120 aus der Atmosphäre einsaugen und diese Luftmenge in Strömungsrichtung gesehen über das hinter dem Seitenkanalverdichter 112 angeordnete Umschaltventil 114 wieder in die Atmosphäre blasen können. Diese Einrichtung erlaubt einen Leerlaufbetrieb der Reinigungs- und Trocknungsvorrichtung 110. Werden die Umschaltventile 114 und 120 aus dieser Leerlaufstellung in eine Betriebsstellung umgeschaltet, erzeugt der Seitenkanalverdichter in der Vakuumkammer 122 einen Unterdruck, wohingegen er in der Düse 116 die über den Zyklonabscheider 126 und die Filtereinheit 128 gereinigte und getrocknete Strömungsmenge aus der Düse mit einem Überdruck hinausbläst. Bei einem dahingehenden Betrieb wird also gleichzeitig mit dem Seitenkanalverdichter abgesaugt und geblasen. Es ist aber auch ein wechselweiser Betrieb möglich, bei dem der Seitenkanalverdichter die über die Vakuumkammer 122 abgesaugte Strömungsmenge über das Ventil 120 in Betriebsstellung und über das Ventil 114 in Leerlaufstellung an die Atmosphäre abgibt und dann anschließend nach Beendigung dieses Vorganges, also zeitlich versetzt, aus der Düse 116 über das Ventil 120 in Leerlaufstellung und das Ventil 114 in Betriebsstellung ausbläst. Bei diesem wechselweisen Betrieb lassen sich kurze Umschaltzeiten für das Saugen und Blasen hintereinander erreichen, wobei auch mit einem Blasvorgang an der Düse 116 anstelle eines Absaugvorganges an der Vakuumkammer begonnen werden kann. Die über den Zyklonabscheider 126 und die Filtereinheit 128 abgeschiedenen Schmutzteile einschließlich der Flüssigkeitsteile, die sich beim Absaugen mittels der Vakuumkammer 122 ergeben, die am Ende der Schrägführung 100 angeordnet ist und an der die beiden Bänder vorbeigeführt sind, werden über die Verbindungseinheit 130 in das Innere 20 des Sammelbehälters 10 zurückgeführt. Mittels der Düse 116, die sich am Anfang der Einlaufstelle 96 des Sammelbehälters 10 befindet und an der das Endlosförderband 46 mit dem Filtermittel 56 vorbeigeführt wird, werden die Filtergewebematten 62, die beim Umlauf des Endlosförderbandes nacheinander an dieser Düse 116 vorbeigeführt werden, durchgeblasen und die noch restlich anhaftenden Schmutz- und Flüssigkeitspartikel gelangen hierdurch in das Innere 20 des Sammelbehälters 10 zurück.

Im folgenden wird nun die Funktion der erfindungsgemäßen Filtrieranlage erläutert. Das Innere 20 des Sammelbehälters 10 wird mit einer Suspension 132 über die obere Seite 24 des Sammelbehälters 10, wie bereits beschrieben, befüllt. Die Suspension 132 soll für das hier vorliegende Funktionsbeispiel aus Kühlschmierstoffflüssigkeit und Verunreinigungen, insbesondere in Form von Spänen, wie sie bei der spanabhebenden Bearbeitung entstehen, gebildet sein. Ziel des Filtriervorganges bei dieser Filtrieranlage ist es, die Kühlschmierstoffflüssigkeit in gereinigter Form aus dieser Suspension 132 auszuscheiden und an den Verbraucher, beispielsweise in Form einer Bearbeitungsmaschine, zurückzuführen. Hierzu wird die Saug-Pumpe 30 in Betrieb genommen und im Inneren der Absaugkammer 18 ein Unterdruck erzeugt. Mit dem Vakuummeter 42 wird dieser Unterdruck in der Absaugkammer 18 gemessen und abhängig von dem Wert dieses Unterdruckes die Geschwindigkeit des Endlosförderbandes 46 durch entsprechendes Ansteuern des Getriebemotors 50 gesteuert. Die Filtrieranlage wird also derart betrieben, daß die verschmutzten Filtergewebematten 62 oberhalb des Durchganges 14 kontinuierlich gegen neue unverbrauchte Filtergewebematten 62 ausgetauscht werden, die durch die Reinigungs- und Trocknungsvorrichtung 110 sowie der Bürste 104 in diesen unverbrauchten Zustand gebracht werden, so daß sich auf dem Filtermittel 56 keine Schmutzpartikel, beispielsweise in Form eines Schmutzkuchens derart aufbauen können, daß der Unterdruck in der Absaugkammer 18 in unzulässiger Weise ansteigt. Mithin läßt sich also der Unterdruck in der Absaugkammer 18 im wesentlichen konstant halten, so daß eine optimale Leistung dieser Unterdruck-Filtrieranlage gewährleistet ist. Die Filtergewebematten 62 der einzelnen Segmente 58 sind derart aufgebaut, daß mit diesen eine reine Oberflächenfiltration gewährleistet ist, was für den Betrieb der Anlage ebenfalls von Vorteil ist. Die Schrägführung 100 des Sammelbehälters 10 dient als Abtropfstrecke und soweit das Filtermittel mittels des Endlosförderbandes entlang dieser Schrägführung 100 hochgefördert wird, tropft die Kühlschmierstoffflüssigkeit aus den Filtergewebematten 62 ab und läuft in das Innere 20 des Sammelbehälters 10 mit der Suspension 132 zurück. Soweit noch Kühlschmierstoffflüssigkeit in oder auf den Filtergewebematten vorhanden ist, werden diese mittels des Seitenkanalverdichters 112 über die Vakuumkammer 122, an der diese Filtergewebematten 62 nacheinander vorbeigeführt werden, abgesaugt, wobei bei diesem Absaugvorgang die angesprochenen Partikel aus den Filtergewebematten 62 austreten und über die Perforierung im Endlosförderband 46 in die Vakuumkammer 122 gelangen. Die lose auf den Filtergewebematten 62 befindlichen Schmutzpartikel, insbesondere in Form der Metallspäne, werden von den Stegen 84 aufgefangen und an der Stelle der Spanausgabe 102 aus dem Sammelbehälter 10 hinausgeführt. Dabei bürstet die antreibbare Bürste 104 noch anhaftende Schmutzpartikel und Späne sowohl von den Filtergewebematten 62 als auch von den Stegen 84 ab, die über die Spanausgabe 102 dann ebenfalls nach draußen abgeführt werden. Soweit dann noch Schmutzpartikel an den Filtergewebematten 62 anhaften sollten, werden diese an der Einlaufstelle 96 des Sammelbehälters 10 mittels der Düse 116, die durch die Perforierung des Endlosförderbandes 46 und die Maschen der Filtergewebematte 62 hindurchbläst, in das Innere 20 des Sammelbehälters 10 und damit in die Suspension 132 zurückgebracht.

Wie dies insbesondere die Fig.1 zeigt, läßt sich mittels Abdeckblechen 134 der Sammelbehälter 10 in ein geschlossenes System verwandeln, aus dem die Suspension 132 in keinem Fall austreten kann. Dadurch, daß das Filtermittel 56 mit der hier vorgegebenen erfindungsgemäßen Filtrieranlage ständig erneuerbar ist, muß dieses auch nicht gegen ein neues Filtermittel ausgetauscht werden, sondern verbleibt vielmehr in der Filtrieranlage für einen ständigen Einsatz. Somit sind mit der erfindungsgemäßen Filtrieranlage nur noch die Späne und die Schmutzpartikel, die über die Spanausgabe 102 entsorgt werden, als Abfall vorhanden.

Die teure Kühlschmierstoffflüssigkeit hingegen verbleibt im System der Filtrieranlage und kann somit vollständig an den Verbraucher wieder rücküberführt werden.

Bei dem zweiten nachfolgenden Ausführungsbeispiel sind diejenigen Teile, die den Teilen des ersten Ausführungsbeispieles entsprechen mit um jeweils 100 erhöhten Bezugszahlen wiedergegeben. Dieses zweite Ausführungsbeispiel wird auch nur noch im wesentlichen insoweit erläutert werden, als es sich von dem ersten Ausführungsbeispiel unterscheidet. Es soll also soweit keine anderen abweichenden Ausführungen zu dem zweiten Ausführungsbeispiel gemacht werden, daß für das erste Ausführungsbeispiel Gesagte auch für dieses nachfolgende Ausführungsbeispiel gelten.

Wie die Fig. 5 bis 7 zeigen, weisen diejenigen Ränder 172, die, soweit die einzelnen Segmente 158 in Reihe hintereinander angeordnet sind (Fig. 6 und 7) benachbart gegenüberliegende Reihen von Ösen 141 auf. Diese Ösen 141 werden wie folgt hergestellt. Zunächst werden rechteckförmige Laschen ausgeschnitten, wobei sich der Schnittverlauf aus der Draufsicht in Fig. 5 entnehmen läßt. Diese rechteckförmigen Laschen werden dann in einem Tiefziehverfahren nach oben herausgezogen und bilden, wie dies insbesondere sich den Fig. 6 und 7 entnehmen läßt, die Ösen 141.

Die Ösen 141 sind, wie dies insbesondere die Fig. 5 zeigt, in einer Reihe, die quer zu der Transportrichtung des Filtermittels 156 verläuft hintereinander angeordnet und umschließen, wie dies insbesondere die Fig. 6 und 7 zeigen, einen Raum 143, in den die jeweils hierfür vorgesehenen Enden der Zugfedern 180 eingreifen. Der Einfachheit halber sind in den Fig. 6 und 7 die dort gezeigte Zugfeder 180 mit einer Strichlinie nur andeutungsweise eingezeichnet. Die Zugfedern 180 werden zwischen den einzelnen, einander benachbart gegenüberliegend angeordneten Segmenten 158 derart angeordnet, daß ihre beiden Enden jeweils in den einander unmittelbar benachbart gegenüberliegend angeordneten Ösen 141 dieser Segmente 158 eingreifen. Die Ösen 141 sind, wie dies insbesondere die Fig. 6 und 7 zeigen, mit einem Querschnitt herausgezogen, der gewährleistet, daß sie als sicheres Widerlager für die einzelnen Zugfedern 180 dienen, insbesondere schließen ihre freien Enden 145 mit der Oberseite der Ränder 172 ab.

Im Gegensatz zu den Fig. 3 und 4, die den Fig. 6 und 7 entsprechen, ist bei den letztgenannten das Endlosförderband 146 gezeigt, das perforiert ist, mithin also Durchlässe 147 aufweist (s. insbesondere Fig. 6). Diese Durchlässe 147 sind unterhalb der Filtergewebematten 162 angeordnet und erlauben eine durchgehende Verbindung zwischen dem Inneren des Sammelbehälters und dem Inneren der Absaugkammer. Die Oberseite des Endlosförderbandes liegt auf den Unterseiten 168 der Segmente 158 an. Die Stege 184 sind derart auf dem Endlosförderband mittels den Befestigungsmitteln befestigt, daß zwischen der Oberseite dieses Endlosförderbandes und der Unterseite 188 des Steges 184 jeweils ein Spalt begrenzt ist, zwischen dem die jeweiligen Segmente 158 des Filtermittels 156 für den Längenausgleich mit ihren Rändern 172 hindurchbewegbar sind. Für das erste Ausführungsbeispiel, bei dem aus Vereinfachungsgründen in den Fig. 3 und 4 das Endlosförderband 46 nicht dargestellt ist, gelten die diesbezüglichen Ausführungen ebenso.

Die Hohlräume 190 der Stege 184 bilden mit ihren einander benachbart gegenüberliegend angeordneten Seitenflächen 192 die Anschläge, diesmal für das Anlegen der nicht freien Enden der Ösen 141, so daß auch bei dem zweiten Ausführungsbeispiel gewährleistet ist, daß bei einer Zerstörung der Verbindungsmittel in Form der Zugfedern 180 das Endlosband 194, das aus den einzelnen Segmenten 158 des Filtermittels 156 gebildet ist, nicht aufgeht und von dem als Transportmittel dienenden Endlosförderband 146 fällt.

## Patentansprüche

1. Filtrieranlage zum Abfiltrieren einer Flüssigkeit aus einer Suspension (132) mit einem Sammelbehälter (10) für die Aufnahme der Suspension, der mit einer Absaugkammer (18), in der ein Unterdruck erzeugbar ist, über mindestens einen von einem endlosen Filtermittel (56, 156) abdeckbaren Durchgang (14) verbunden ist, wobei das Filtermittel (56, 156) auf einem angetriebenen, Stege (84, 184) aufweisenden Endlosförderband (46, 146) über den jeweiligen Durchgang (14) hinwegbewegbar ist, und an der Stelle des Durchganges (14) das Filtermittel (56, 156) zwischen der Suspension (132) und dem Förderband (46, 146) angeordnet ist,
dadurch gekennzeichnet, daß das Filtermittel (56, 156) aus einzelnen biegefähigen Segmenten (58, 158) besteht und je zwei nacheinander angeordnete Segmente (58, 158) über mindestens ein mit seinen Enden an den einander zugewandten Rändern (72, 172) der Segmente (58, 158) angreifenden Federelement (80) miteinander verbunden sind.

2. Filtrieranlage nach Anspruch 1, dadurch gekennzeichnet, daß das Filtermittel (56, 156) Filtergewebematten (62, 162), vorzugsweise aus einem Stahlgeflecht mit vorgebbarer Maschenweite aufweist.

3. Filtrieranlage nach Anspruch 2, dadurch gekennzeichnet, daß das jeweilige Verbindungsmittel aus einer Zugfeder (80, 180), gebildet ist.

4. Filtrieranlage nach Anspruch 3, dadurch gekennzeichnet, daß an den einander benachbart gegenüberliegenden Rändern (72) der einzelnen Segmente (58) diese mit Durchbrüchen (78) versehene Umbördelungen aufweisen, durch die Stäbe (76) gesteckt sind, wobei die Zugfedern (80) im Bereich der Durchbrüche (78) an den Stäben (76) befestigt sind.

5. Filtrieranlage nach Anspruch 3, dadurch gekennzeichnet, daß an den einander benachbart gegenüberliegenden Rändern (172) der einzelnen Segmente (158) diese in Reihe hintereinander angeordnete einzelne Ösen (141) aufweisen, in die die jeweils hierfür vorgesehenen Enden der Federelemente eingreifen.

6. Filtrieranlage nach einem der Ansprüche 1 bis 5, dadurch gekennzeichnet, daß die Stege (84, 184), die zwischen den einander benachbart gegenüberliegend angeordneten Segmenten (58, 158) gebildete Trennstelle (82, 182) überdecken, daß diese Stege (84, 184) mit dem Endlosförderband (46, 146) mittels Befestigungsmitteln verbunden sind und daß die Stege (84, 184) mit dem Endlosförderband (46, 146) jeweils einen Spalt begrenzen, zwischen dem die jeweiligen Segmente (58, 158) des Filtermittels (56, 156) zumindest mit einem ihrer Ränder (72, 172) hindurchbewegbar sind.

7. Filtrieranlage nach Anspruch 6, dadurch gekennzeichnet, daß die Stege (84, 184) mit ihren dem Endlosförderband (46, 146) zugekehrten Seiten einen Hohlraum (90, 190) begrenzen, in dem die Verbindungsmittel aufnehmbar sind und daß die Befestigungsmittel für die Stege (84, 184) zwischen den durch die Federelemente gebildeten Abständen hindurchgreifen.

8. Filtrieranlage nach einem der Ansprüche 2 bis 7, dadurch gekennzeichnet, daß die Verbindungsmittel über die Oberfläche des Filtriermittels (56, 156) hinausragen und daß die Stege (84, 184) Anschläge (92, 192) aufweisen.

9. Filtrieranlage nach einem der Ansprüche 1 bis 8, dadurch gekennzeichnet, daß der Durchgang (14) am Boden des Sammelbehälters (10) vorgesehen ist, daß der Durchgang (14) von Stützelementen (22) durchzogen ist, und daß die Absaugkammer (18) unterhalb des Durchganges (14) mit den Stützelementen (22) angeordnet ist.

10. Filtrieranlage nach einem der Ansprüche 1 bis 9, dadurch gekennzeichnet, daß der Sammelbehälter (10) Ein- und Auslaufstellen (96, 98) für das Endlosförderband (46, 146) mit dem Filtermittel (56, 156) aufweist, daß an der Auslaufstelle (98) der Sammelbehälter (10) eine Schrägführung (100) aufweist, daß an der Auslaufstelle (98) eine Rückstandsausgabe (102) vorhanden ist und daß an der Ein- und Auslaufstelle (96, 98) die Spannrolle (54) bzw. der Antrieb (48) des Endlosförderbandes (46, 146) vorgesehen ist.

11. Filtrieranlage nach Anspruch 10, dadurch gekennzeichnet, daß in Bewegungsrichtung des Endlosförderbandes (46, 146) der Rückstandsausgabe (102) nachgeordnet eine antreibbaren Bürste (104), vorgesehen ist, mittels der das Filtermittel (56, 156) abbürstbar ist.

12. Filtrieranlage nach einem der Ansprüche 1 bis 11, dadurch gekennzeichnet, daß diese eine Reinigungs- und Trocknungsvorrichtung aufweist, bei der mittels einer Düse (116) das Filtermittel (56,156) anblasbar und/oder durchblasbar ist.

13. Filtrieranlage nach einem der Ansprüche 1 bis 11, dadurch gekennzeichnet, daß diese eine Reinigungs- und Trocknungsvorrichtung aufweist, bei der mittels einer Vakuumkammer (112) die Oberfläche des Filtermittels (56,156) absaugbar ist.

14. Filtrieranlage nach Anspruch 12, dadurch gekennzeichnet, daß die Reinigungs- und Trocknungsvorrichtung mit derjenigen nach Anspruch 13 kombinierbar ist und daß eine Strömungseinrichtung, vorzugsweise in Form eines Seitenkanalverdichters (112), mit der Vakuumkammer (122) und mit der Düse (116) verbunden ist.

15. Filtrieranlage nach Anspruch 14, dadurch gekennzeichnet, daß die Vakuumkammer (122) an der Auslaufstelle (98) und die Düse (116) an der Einlaufstelle (96) des Sammelbehälters (10) vorgesehen sind.

## Claims

1. Filtering apparatus for filtering off a liquid from a suspension (132) with a collecting container (10) for receiving the suspension, which is connected to a suction chamber (18), in which a vacuum can be produced, by way of at least one passage (14) able to be covered by an endless filter aid (56, 156), the filter aid (56, 156) being able to be moved across the respective passage (14) on a driven endless conveyor belt (46, 146) comprising webs (84, 184) and at the point of the passage (14), the filter aid (56, 156) is located between the suspension (132) and the conveyor belt (46, 146), characterised in that the filter aid (56, 156) consists of individual bendable segments (58, 158) and two segments (58, 158) arranged respectively in succession are connected to each other by way of at least one spring member (80) acting by its ends on the facing edges (72, 172) of the segments (58, 158).

2. Filtering apparatus according to Claim 1, characterised in that the filter aid (56, 156) comprises filter gauze mats (62, 162), preferably consisting of a steel mesh with a mesh aperture wich can be predetermined.

3. Filtering apparatus according to Claim 2, characterised in that the respective connecting means is formed by a tension spring (80, 180).

4. Filtering apparatus according to Claim 3, characterised in that at the adjacent opposite edges (72) of the individual segments (58), the latter comprise beads provided with openings (78), through which rods (76) are inserted, the tension springs (80) being attached to the rods (76) in the region of the openings (78).

5. Filtering apparatus according to Claim 3, characterised in that at the adjacent opposing edges (172) of the individual segments (158), the latter comprise individual eyelets (141) arranged in a row one after the other, in which the ends of the spring members respectively provided therefor engage.

6. Filtering apparatus according to one of Claims 1 to 5, characterised in that the webs (84, 184) overlap the separating point (82, 182) formed between the adjacent opposing segments (58, 158), that these webs (84, 184) are connected to the endless conveyor belt (46, 146) by means of fasteners and that the webs (84, 184) respectively define a gap with the endless conveyor belt (46, 146), between which the respective segments (58, 158) of the filter aid (56, 156) are able to move at least by one of their edges (72, 172).

7. Filtering apparatus according to Claim 6, characterised in that by their sides facing the endless conveyor belt (46, 146), the webs (84, 184) define a cavity (90, 190), in which the connecting means can be received and that the fasteners for the webs (84, 184) engage between the spacings formed by the spring members.

8. Filtering apparatus according to one of Claims 2 to 7, characterised in that the connecting means project beyond the surface of the filter aid (56, 156) and that the webs (84, 184) comprise stops (92, 192).

9. Filtering apparatus according to one of Claims 1 to 8, characterised in that the passage (14) is provided at the bottom of the collecting container (10), that support members (22) pass through the passage (14) and that the suction chamber (18) is located below the passage (14) with the support members (22).

10. Filtering apparatus according to one of Claims 1 to 9, characterised in that the collecting container (10) comprises inlet and outlet points (96, 98) for the endless conveyor belt (46, 146) with the filter aid (56, 156), that at the outlet point (98) the collecting container (10) comprises an inclined guide (100), that at the outlet point (98) a residue outlet (102) is provided and that at the inlet and outlet point (96, 98) the tensioning roller (54) or the drive (48) of the endless conveyor belt (46, 146) is provided.

11. Filtering apparatus according to Claim 10, characterised in that located after the residue outlet (102) in the direction of movement of the endless conveyor belt (46, 146), a driveable brush (104) is provided, by means of which the filter aid (56, 156) can be brushed.

12. Filtering apparatus according to one of Claims 1 to 11, characterised in that the latter comprises a cleaning and drying device, in which blowing onto and/or through the filter aid (56, 156) can be carried out by means of a nozzle (116).

13. Filtering apparatus according to one of Claims 1 to 11, characterised in that the latter comprises a cleaning and drying device, in which the surface of the filter aid (56, 156) can be subject to suction by means of a vacuum chamber (112).

14. Filtering apparatus according to Claim 12, characterised in that the cleaning and drying device can be combined with that according to Claim 13 and that a flow device, preferably in the form of a lateral channel compressor (112), is connected to the vacuum chamber (122) and to the nozzle (116).

15. Filtering apparatus according to Claim 14, characterised in that the vacuum chamber (122) is provided at the outlet point (98) and the nozzle (116) is provided at the inlet point (96) of the collecting container (10).

## Revendications

1. Installation pour séparer par filtrage la phase liquide ou fluide d'une suspension (132) comprenant un réservoir-collecteur (10) qui reçoit ladite suspension, qui est relié à une chambre d'aspiration (18), dans laquelle peut être produite une pression négative, par, au moins, un passage (14) pouvant être couvert par un moyen de filtrage sans fin (56, 156), ledit moyen de filtrage (56, 156) pouvant être transporté sur une bande sans fin mobile (46, 146) présentant des passerelles (84, 184), au-dessus dudit passage (14), le moyen de filtrage (56, 156) étant disposé entre la suspension (132) et la bande transporteuse (46, 146). caractérisée en ce que le moyen de filtrage (56, 156) se compose d'un certain nombre de segments flexibles individuels (58, 158), les segments adjacents (58, 158) de chaque paire étant reliés ensemble par, au moins, un élément élastique (80) dont les extrémités s'appliquent sur les bords en regard (72, 172) desdits segments (58, 158).

2. Installation de filtrage selon la revendication 1, caractérisée en ce que le moyen de filtrage (56, 156) comporte des tapis textiles filtrants (62, 162), comportant, de préférence, un treillis d'acier dont les mailles ont des dimensions prédéterminées.

3. Installation de filtrage selon la revendication 2, caractérisée en ce que les moyens de liaison respectifs comprennent un ressort de tension ou de traction (80, 180).

4. Installation de filtrage selon la revendication 3, caractérisée en ce que les bords adjacents opposés (72) des segments respectifs (56) ont des rebords présentant des discontinuités (78) qui sont couvertes par des tiges (76), tandis que les ressorts de tension (80) sont fixés aux tiges (76) dans la région desdites discontinuités (78).

5. Installation de filtrage selon la revendication 3, caractérisé en ce que les bords adjacents opposés (172) des segments individuels (158) présentent des oeillets individuels alignés (141) dans lesquels s'engagent les extrémités prévues à cette fin des éléments élastiques.

6. Installation de filtrage selon l'une quelconque des revendications 1 à 5, caractérisée en ce que les passerelles (84, 184) couvrent la solution de continuité ou l'intervalle (82, 182) formé entre les segments adjacents opposés (58, 158), en ce que ces passerelles sont reliées à la bande transporteuse sans fin par des moyens de fixation, et en ce que lesdites passerelles (84, 184) limitent, avec la bande transporteuse sans fin (46, 146) un intervalle ou une fente dans laquelle peut passer l'un, au moins, des bords (72, 172) des différents segments respectifs (58, 158) du moyen de filtrage (56, 156).

7. Installation de filtrage selon la revendication 6, caractérisée en ce que les passerelles (84, 184) délimitent, avec leurs côtés en regard de la bande sans fin (46, 146) une cavité (90, 190) dans laquelle peuvent être reçus les moyens de liaison et en ce que les moyens de fixation pour les passerelles (84, 184) passent dans les intervalles formés par les éléments élastiques.

8. Installation de filtrage selon l'une quelconque des revendications 2 à 7, caractérisée en ce que les moyens de liaison s'avancent au-dessus de la surface du moyen de filtrage (56, 156) et en ce que les passerelles (84, 184) présentent des butées (92, 192).

9. Installation de filtrage selon l'une quelconque des revendications 1 à 8, caractérisée en ce que le passage (14) est situé au fond du réservoir-collecteur (10), en ce que le passage (14) est traversé par des éléments de renfort (22) et en ce que la chambre d'aspiration (18) est située sous le passage (14) avec les éléments de renfort (22).

10. Installation de filtrage selon l'une quelconque des revendications 1 à 9, caractérisée en ce que le réservoir-collecteur (10) comporte des points d'entrée et de sortie (96, 98) pour la bande transporteuse sans fin (46, 146) avec le moyen de filtrage (56, 156), en ce que, au point de sortie (98), le réservoir-collecteur (10) présente un guidage incliné (100), en ce que, au point de sortie (98) se trouve un distributeur de déchets ou de résidus (102) et en ce que, aux points d'entrée et de sortie (96, 98) est prévu un rouleau de tension (54) ou l'actionnement (48) de la bande transporteuse sans fin (46, 146).

11. Installation de filtrage selon la revendication 10, caractérisée en ce que, dans le sens du mouvement de la bande transporteuse sans fin (46, 146) est prévue, à la suite de l'évacuation des résidus et des déchets (102), une brosse mécanique (104), au moyen de laquelle le moyen de filtrage (56, 156) peut être nettoyé.

12. Installation de filtrage selon l'une quelconque des revendications 1 à 11, caractérisée en ce qu'elle possède un dispositif de nettoyage et de séchage permettant, au moyen d'une buse (116) de souffler sur et ou à travers le moyen de filtrage (56, 156).

13. Installation de filtrage selon l'une quelconque des revendications 1 à 11, caractérisée en ce qu'elle possède un dispositif de nettoyage et de séchage permettant, au moyen d'une chambre à vide (112) d'exercer une aspiration sur la surface du moyen de filtrage (55, 155).

14. Installation de filtrage selon la revendication 12, caractérisée en ce que le dispositif de nettoyage et de séchage peut être combiné avec celui de la revendication 13, et en ce que, un dispositif de circulation, de préférence, sous la forme d'un compresseur de canal latéral (112) est relié avec la chambre à vide (122) et avec la buse (116).

15. Installation selon la revendication 14, caractérisée en ce que la chambre à vide (122) est prévue à la sortie (98) et la buse à l'entrée (96) du réservoir-collecteur (10).
